# EUROPEAN PATENT SPECIFICATION

(11) **EP 4 180 323 B1**
(45) Date of publication and mention of the grant of the patent: **11.09.2024**
(21) Application number: 21383020.1
(22) Date of filing: 11.11.2021
(51) Int. Cl.: B64C 3/28

(54) **JOINING ELEMENT FOR TRAILING EDGE**
VERBINDUNGSELEMENT FÜR HINTERKANTE
ÉLÉMENT DE JONCTION POUR BORD DE FUITE

(43) Date of publication of application: 17.05.2023
(73) Proprietor: Aciturri Engineering, S.L., 47151 Boecillo Valladolid (ES)
(72) Inventor: RAVONE, Paolo, 47151 BOECILLO (Valladolid) (ES); BERENDS ISASI, Daniel, 47151 BOECILLO (Valladolid) (ES); ORTEGA SAN MARTÍN, Javier, 47151 BOECILLO (Valladolid) (ES)
(74) Representative: Herrero & Asociados, S.L.

(56) References cited:
- EP-A1- 3 683 139
- US-A- 4 657 615
- US-A1- 2004 000 613
- US-A1- 2014 339 370

## Description

### Object of the invention

The present invention falls within the technical field of wings and similar aerodynamic elements, more specifically that of leading or trailing edges attached to primary structures, as well as that of the structural features of rotor blades, and it particularly relates to a joining element for trailing edges of aerodynamic profiles.

This joining element is specially applied in the case of the trailing edges of the aerodynamic surfaces of an aircraft, although it can also be used in the fields of aerospace, naval construction or even civil works.

### Background of the invention

Sandwich composite skins are manufactured by joining two thin and hard outer sheets, typically made of carbon fiber reinforced plastic laminates, with a thick but light core, usually made of foam with an open and closed cell structure. The core must have a minimum thickness to withstand the pressure transmitted by the reinforced carbon fiber laminate during the curing cycle, wherein high temperature and pressure are applied, otherwise the core would break under that pressure.

The trailing edges of aerodynamic structures, such as aircraft wings, are formed by joining the upper skin and the lower skin of said structure. To obtain the desired aerodynamic profile, in the area of the trailing edge the thickness of the upper and lower skins decreases.

When the upper skin and the lower skin of said aerodynamic structure are made of sandwich-type composite materials, due to the required minimum thickness of the core of each skin, there is a change in the slope of the upper skin and the lower skin that worsens the aerodynamic profile of the aforementioned trailing edge.

Currently, to achieve a continuous aerodynamic profile, the upper and lower skins are joined by means of a metal clip-type sheet, with a "U" shape, and the remaining space is filled with a paste, until the continuous aerodynamic profile is obtained. In the case of aerodynamic profiles used in aircraft, this paste can crack and fall off the stabilizers of the aircraft, and when falling, it also drags the painting.

Some patent documents relating to trailing edges for aerodynamic surfaces are known in the current state of the art. For example, document ES2421410 discloses a trailing edge of an aerodynamic surface of an aircraft, which comprises an upper skin and a lower skin made of composite material. At one end of the top and bottom skins of the trailing edge, a lightweight skin is mounted. The light skin is covered by a metal sheet and has a "V" shaped section with arms and a sharp point, in the light skin the sharp point of the "V" shaped section is rounded and is located opposite the end part of the upper and lower skins.

The minimum thickness that can be reached at the trailing edge of the previous patent is conditioned by the minimum thicknesses that the sheet can reach without appearing the effect known as "knife edge" (adverse effect in which the sheet or small thickness element that has been countersunk, cuts the joining element) at the rivet joint in case of use of countersunk rivets, and the bending radii of the sheet, which generates greater limitations on the thickness of the trailing edge, resulting in a noticeable deterioration in aerodynamic efficiency.

In case the rivets are protruding, the thickness of the sheet determines the minimum thickness of the trailing edge, since for each sheet thickness there is a minimum bending radius. In this case, another problem appears, which is associated with the need to cover the protruding rivets with sealant to maintain aerodynamics, which prevents said rivets from being inspected. Also, solid rivets or any rivet that expands the shank cannot be used as this could lead to delaminations in the composite.

This same problem occurs in other patent documents, such as in publication ES2367935, which describes a trailing edge of an aircraft stabilizing surface, said surface being made of composite material and comprising an outer skin and an inner skin that are joined together through a clip-like joining element on said trailing edge.

The clip-type joining element comprises at its ends some recesses intended to couple with the interior area of the upper and lower skins of the stabilizing surface, in such a way that the clip-type joining element is flexible enough to allow it to be pinched, and its ends are housed, by means of the recesses, between the exterior and interior skins of the stabilizing surface of the aircraft.

This trailing edge also presents other difficulties derived from its geometry. When it is straight, it can be manufactured relatively easily by forming the sheet, but when the trailing edge has a single or double curvature, the difficulty increases considerably.

Other solutions, such as that of document WO2004002820A1, manage to avoid this detail in the absence of thickness limitations. That document discloses a preform that is attached to converging skins of a structure, such as an aerodynamic profile, to form a structural edge. The preform has a body having an acute angled edge at one end and connecting areas extending from the opposite end to connect the preform to converging planar elements of a wing or other similar structure. The acute angle of the preform generally coincides with the angle with respect to the converging ends of the planar elements, with the preform forming the outer end of continuous, smooth outer surfaces after assembly.

Therefore, there is still a need to have a joining element for trailing edges of aerodynamic profiles that provides additional advantages to currently existing devices, such as adding a minimum weight to the profile, increasing the space available for joining elements such as rivets or being able to be obtained from a smaller quantity of material and at a lower cost.

### Description of the invention

The object of the invention consists of a joining element for trailing edges of aerodynamic profiles that solves the problems previously described by means of a new design.

The joining element is configured to be inserted between two converging skins, an upper and a lower one, which form the edge of a structural box with an aerodynamic profile. In a preferred embodiment, the joining element in use is located between the respective outer edges of two skins, an upper sloping one and a lower straight one.

The joining element is made up of an elongated laminar skin, with an upper face orientable towards the upper skin, a lower face orientable towards the lower skin, and a profile in the shape of a half arrowhead. Both the upper face and the lower face have a plurality of projections and widenings intended to facilitate the join with the skins of the trailing edge.

In a preferred embodiment of the joining element, the lower face has a skirt wherein one of the convergent skins joins, then, at the edge of the surface, the profile begins to widen on both faces and then remains constant on the lower face and tapers on the upper face. This narrowing allows the join with the upper skin, wherein the angle at the narrowing area coincides with the angle at the end of the upper surface.

This widening and narrowing are repeated on the other face, making the invention look like half an arrowhead. The converging skins of the trailing edge remain flush with the outer surface of the invention after assembly, flush, and any possible gaps are filled with sealant, forming continuous and smooth outer surfaces.

The final edge obtained can be brought to the necessary thickness, presenting advantages such as an improvement in aerodynamic efficiency. In addition, the fact of misaligning the surfaces to which the element is joined allows leaving more space for the joining elements or standards in the internal area of the converging surfaces, being able to use a greater variety of said standards by not having any element in the counterpart that may hinder or prevent correct access for different tools. In particular, if the converging surfaces to be joined are metallic, solid rivets could be used which reduce the installation cost.

With respect to the solution described in the aforementioned document WO2004002820A1, the invention presents geometric changes that make it possible to eliminate one of the skirts joining the converging skin, thus reducing the weight as a consequence of bringing the converging skin ends front. As already mentioned, this also increases the space available for the installation of a greater variety of joining elements and tools for their installation, such as solid rivets that are installed with a compression riveter. The spaces between the two skins and the joining element are filled with sealant to ensure the continuity of the aerodynamic surface.

It is therefore concluded that the object of the present invention, for its application to trailing edges of aerodynamic profiles, allows solving in an advantageous and simple way the drawbacks of the current state of the art.

### Description of the drawings

To complement the description that is being made and in order to help a better understanding of the features of the invention, according to a preferred example of a practical embodiment thereof, a set of drawings is attached as an integral part of said description wherein, for illustrative and non-limiting purposes, the following has been represented:
Figure 1.- Shows a top perspective view of the trailing edge, wherein its geometry can be seen.
Figure 2.- Shows a perspective view of the end of a control surface for the purpose of the present invention installed in the area of the trailing edge of the same.
Figure 3.- Shows a side view of a cross section of figure 2.
Figure 4.- Shows a detail of the edge with two converging skins.

### Preferred embodiment of the invention

A detailed explanation of a preferred embodiment of the object of the present invention is provided below, with the aid of the aforementioned figures.

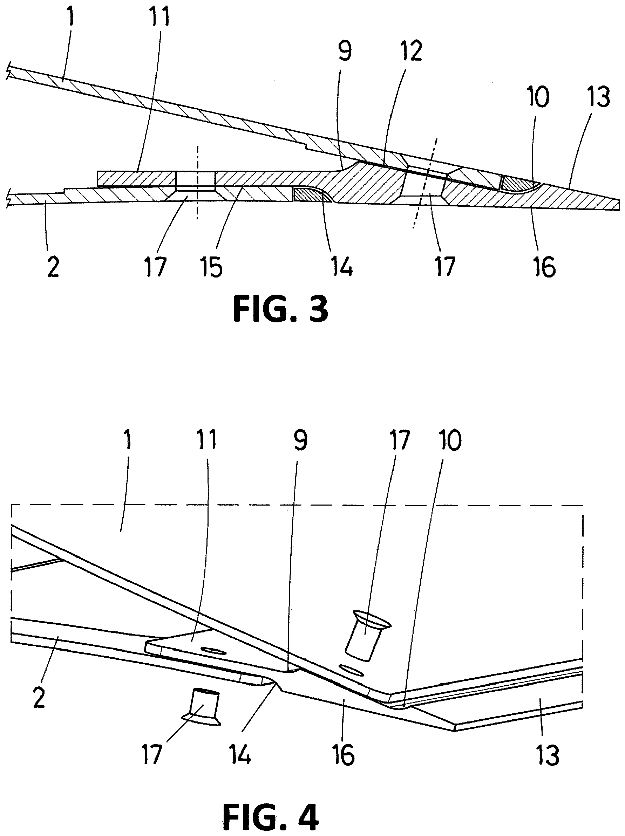

The joining element for trailing edges of aerodynamic profiles that is described is intended to be inserted between two convergent skins of a structure with an aerodynamic profile, more specifically between the respective external edges of an upper skin (1), which in this case is inclined with respect to the horizontal, and a lower skin (2), which in this case is parallel to the horizontal as seen in figure 3.

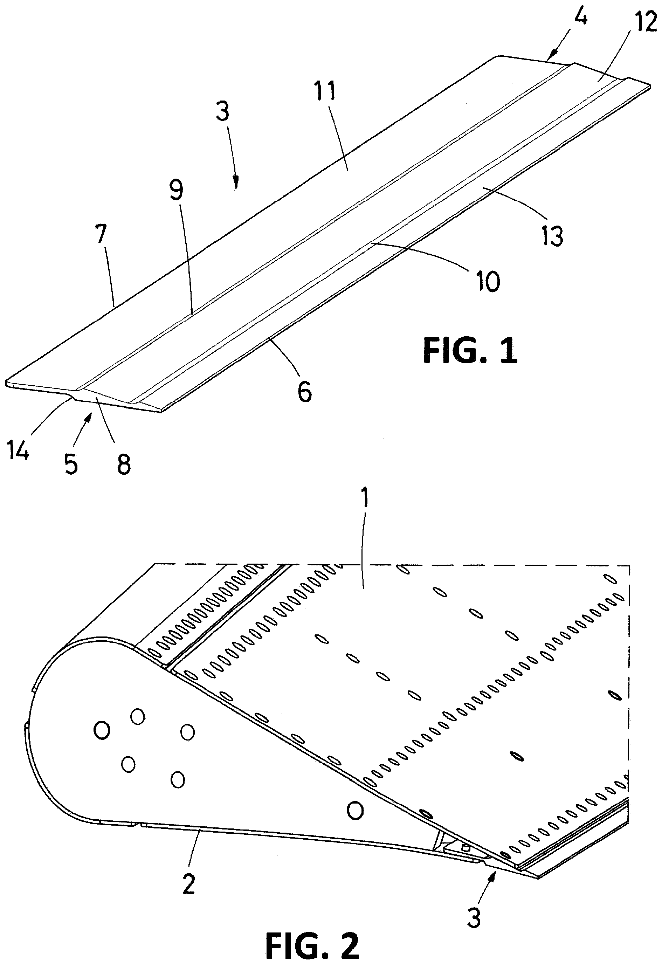

The joining element, shown in Figures 1 and 2, is made up of a laminar body (3) of elongated geometry, which has an upper face (4), a lower face (5) opposite the upper face (4), an external longitudinal edge (6), an internal longitudinal edge (7) and lateral edges or profiles (8).

The upper face (4) is intended to be oriented towards an internal face of the upper skin (1), while the lower face (5) is intended to be oriented towards an internal face of the lower skin (2).

The laminar body (3) comprises, on its upper face (4), a first longitudinal projection (9) and a second longitudinal projection (10), parallel to each other and to the longitudinal edges (6 and 7).

The laminar body (3) presents on its upper face (4), consecutively from the internal longitudinal edge (7):
- a first straight sector (11) delimited between the internal longitudinal edge (7) and the first longitudinal projection (9);
- a first skirt (12), delimited between the first longitudinal projection (9) and the second longitudinal projection (10); and
- a second skirt (13), delimited between the second longitudinal projection (10) and the external longitudinal edge (6).

The first skirt (12) presents a profile that diminishes from the first longitudinal projection (9) towards the second longitudinal projection (10), so that it acts as a support surface for the upper skin (1). The second longitudinal projection (10) is configured for engagement with an extreme perimeter edge of the upper skin (1).

The second skirt (13) presents a profile that diminishes from the second longitudinal projection (10) towards the external longitudinal edge (6), so that, in use, it is flush with the upper skin (1), as can be seen in the figures 2 and 3.

For its part, the lower face (5) of the laminar body (3) has a third longitudinal projection (14), parallel to the longitudinal edges (6 and 7). Thus, said lower face (5) comprises, consecutively from the internal longitudinal edge (7):
- a second straight section (15) delimited between the internal longitudinal edge (7) and the third longitudinal projection (14); and
- a third straight section (16) delimited between the third longitudinal projection (14) and the external longitudinal edge (6).

Figures 3 and 4 show the lateral profile (8) that the laminar body (3) thus described presents, similar to a half arrowhead.

The second straight section (15) acts as a bearing surface for the lower skin (2), as illustrated in Figures 3 and 4. The third longitudinal projection (14) is configured for engagement with an extreme perimeter edge of the lower skin (2), so that the third straight section (16) is flush with said lower skin (2).

Fixing means (17) integrally fix the laminar body (3) to the upper (1) and lower (2) skins. In the preferred embodiment shown herein, said fixing means (17) are rivets.

Finally, to ensure aerodynamic continuity between the skins (1,2) and the joining element, the incorporation of sealant beads is foreseen.

## Claims

1. Joining element for trailing edges of aerodynamic profiles, insertable in the edge of a structure with an aerodynamic profile made up of a converging upper skin (1) and a lower skin (2), wherein the joining element is made up of an elongated laminar body (3), having:
- an upper face (4) orientable towards an internal face of the upper skin (1);
- a lower face (5) orientable towards an internal face of the lower skin (2);
- an external longitudinal edge (6);
- an internal longitudinal edge (7); and
- two side profiles (8);
wherein the laminar body (3) comprises:
- on the upper face (4), consecutively from the internal longitudinal edge (7):
- a first straight section (11) delimited between the internal longitudinal edge (7) and a first longitudinal projection (9);
- a first skirt (12), delimited between the first longitudinal projection (9) and a second longitudinal projection (10); and
- a second skirt (13), delimited between the second longitudinal projection (10) and the external longitudinal edge (6); and
- on the lower face (5), consecutively from the internal longitudinal edge (7):
- a second straight section (15) delimited between the internal longitudinal edge (7) and a third longitudinal projection (14); and
- a third straight section (16) delimited between the third longitudinal projection (14) and the external longitudinal edge (7).

2. Joining element according to claim 1, wherein the first skirt (12) has a profile that diminishes from the first projection (8) towards the second projection (9) to support the upper skin (1).

3. Joining element according to any of the preceding claims wherein the second skirt (13) has a profile that diminishes from the second projection (9) towards the external longitudinal edge (6).

4. Joining element according to any of the preceding claims that incorporates fixing means (17) for integrally fixing the laminar body (3) to the upper (1) and lower (2) skins.

5. Joining element according to claim 4, wherein the fixing means (17) are rivets.

## Patentansprüche

1. Verbindungselement für Hinterkanten von aerodynamischen Profilen, einsetzbar in die Kante einer Struktur mit einem aerodynamischen Profil, das aus einer konvergierenden oberen Haut (1) und einer unteren Haut (2) aufgebaut ist, wobei das Verbindungselement aus einem länglichen Schichtkörper (3) aufgebaut ist, mit:
- eine obere Fläche (4), die zu einer Innenfläche der oberen Haut (1) hin ausgerichtet werden kann;
- eine untere Fläche (5), die zu einer Innenfläche der unteren Haut (2) hin ausgerichtet werden kann;
- eine äußere Längskante (6);
- eine innere Längskante (7); und
- zwei Seitenprofile (8);
wobei
der Schichtkörper (3) hat:
- auf der oberen Fläche (4), ausgehend von der inneren Längskante (7), nacheinander
- einen ersten geraden Abschnitt (11), der zwischen der inneren Längskante (7) und einem ersten Längsvorsprung (9) begrenzt ist;
- eine erste Schürze (12), die zwischen dem ersten Längsvorsprung (9) und einem zweiten Längsvorsprung (10) begrenzt ist; und
- eine zweite Schürze (13), die zwischen dem zweiten Längsvorsprung (10) und der äußeren Längskante (6) begrenzt ist; und
- auf der unteren Fläche (5), fortlaufend von der inneren Längskante (7):
- einen zweiten geraden Abschnitt (15), der zwischen der inneren Längskante (7) und einem dritten Längsvorsprung (14) begrenzt ist; und
- einen dritten geraden Abschnitt (16), der zwischen dem dritten Längsvorsprung (14) und der äußeren Längskante (7) begrenzt ist.

2. Verbindungselement gemäß Anspruch 1, wobei die erste Schürze (12) ein Profil aufweist, das von dem ersten Vorsprung (8) zu dem zweiten Vorsprung (9) hin abnimmt, um die obere Haut (1) zu stützen.

3. Verbindungselement gemäß einem der vorhergehenden Ansprüche, wobei die zweite Schürze (13) ein Profil aufweist, das von dem zweiten Vorsprung (9) in Richtung der äußeren Längskante (6) abnimmt.

4. Verbindungselement gemäß einem der vorhergehenden Ansprüche, das Befestigungsmittel (17) zur einstückigen Befestigung des Schichtkörpers (3) an der oberen (1) und unteren (2) Schale aufweist.

5. Verbindungselement gemäß Anspruch 4, wobei die Befestigungsmittel (17) Nieten sind.

## Revendications

1. Élément de jonction pour des bords de fuite de profils aérodynamiques, pouvant être inséré dans le bord d'une structure avec un profil aérodynamique constitué d'un revêtement supérieur (1) et d'un revêtement inférieur (2) convergents, dans lequel l'élément de jonction est constitué d'un corps laminaire allongé (3), ayant :
- une face supérieure (4) pouvant être orientée vers une face interne du revêtement supérieur (1) ;
- une face inférieure (5) pouvant être orientée vers une face interne du revêtement inférieur (2) ;
- un bord longitudinal externe (6) ;
- un bord longitudinal interne (7) ; et
- deux profils latéraux (8) ;
dans lequel le corps laminaire (3) comprend :
- sur la face supérieure (4), consécutivement à partir du bord longitudinal interne (7) :
- une première section rectiligne (11) délimitée entre le bord longitudinal interne (7) et une première saillie longitudinale (9) ;
- une première jupe (12), délimitée entre la première saillie longitudinale (9) et une deuxième saillie longitudinale (10) ; et
- une deuxième jupe (13), délimitée entre la deuxième saillie longitudinale (10) et le bord longitudinal externe (6) ; et
- sur la face inférieure (5), consécutivement à partir du bord longitudinal interne (7) :
- une deuxième section rectiligne (15) délimitée entre le bord longitudinal interne (7) et une troisième saillie longitudinale (14) ; et
- une troisième section rectiligne (16) délimitée entre la troisième saillie longitudinale (14) et le bord longitudinal externe (7).

2. Élément de jonction selon la revendication 1, dans lequel la première jupe (12) a un profil qui diminue depuis la première saillie (8) vers la deuxième saillie (9) pour supporter le revêtement supérieur (1).

3. Élément de jonction selon l'une quelconque des revendications précédentes dans lequel la deuxième jupe (13) a un profil qui diminue depuis la deuxième saillie (9) vers le bord longitudinal externe (6).

4. Élément de jonction selon l'une quelconque des revendications précédentes qui incorpore des moyens de fixation (17) pour fixer en une seule pièce le corps laminaire (3) aux revêtements supérieur (1) et inférieur (2).

5. Élément de jonction selon la revendication 4, dans lequel les moyens de fixation (17) sont des rivets.
